# EUROPÄISCHE PATENTSCHRIFT

(11) **EP 1 039 189 B1**
(45) Veröffentlichungstag und Bekanntmachung des Hinweises auf die Patenterteilung: **08.10.2003**
(21) Anmeldenummer: 99125731.2
(22) Anmeldetag: 23.12.1999
(51) Int. Cl.: F16K 21/12, F16K 31/08

(54) **Steuervorrichtung für ein Schaltorgan**
Control system for a switch device
Dispositif de commande d'un organe de commutation

(30) Priorität: 22.03.1999 CH 54399
(43) Veröffentlichungstag der Anmeldung: 27.09.2000
(73) Patentinhaber: SANIMATIC AG, 8954 Geroldswil (CH)
(72) Erfinder: Domeisen, Josef, 8955 Oetwil (CH); Markwalder, Walter, 5436 Würenlos (CH)
(74) Vertreter: Patentanwälte Schaad, Balass, Menzl & Partner AG

(56) Entgegenhaltungen:
- WO-A-87/02751
- DE-A- 3 046 084
- DE-A- 3 338 402
- GB-A- 544 918

## Beschreibung

Die Erfindung betrifft eine verzögernd rückstellende Steuervorrichtung für ein Schaltorgan gemäss den Merkmalen des Oberbegriffs des Anspruches 1.

Eine solche Steuervorrichtung wird beispielsweise in Sanitäranlagen, wie in Wasserhähnen oder Duschen, eingesetzt. Das zugehörige Schaltorgan ist in einem solchen fall ein Wasserventil. Die Steuervorrichtung sorgt dann z.B. dafür, dass das Wasserventil für eine vorbestimmte Zeit offen bleibt und danach selbsttätig wieder schliesst.

Die aus der DE 30 46 084 C1 bekannte gattungsgemässe Steuervorrichtung weist ein Gehäuse mit zwei entlang einer sie durchdringenden Mittellängsachse angeordneten und durch eine ortsfeste Trennwand voneinander getrennte Kammern auf. Die beiden Kammern sind über eine ständig offene Drosselöffnung, die durch die Trennwand und einen Teil der Gehäusewand geführt ist, und über radial zur Mittellängsachse versetzte Durchlassöffnungen in der Trennwand miteinander verbunden. Die Durchlassöffnungen sind durch eine umfangseitig eingespannte und in Richtung der zweiten Kammer öffenbare Schliessmembran geschlossen, die in ihrem Zentrum eine mit einer Ringwulst versehene Öffnung aufweist. Auf den der Trennwand gegenüberliegenden Seiten der Kammern sind jeweils fest mit einer Abschlussmembran verbundene Abschlusswände angeordnet. Die Abschlussmembranen dichten die Kammern auf der Seite der Abschlusswände ab und sind umfangseitig zwischen Teilen des Gehäuses eingespannt. Sie tragen beweglich die Abschlusswände zwischen den Gehäusewänden. Zwischen der Abschlusswand der ersten Kammer und der Gehäusewand ist ein Steuerraum ausgebildet, der zur Übertragung eines Druckimpuls an die erste Kammer dient. Wird solch ein Druckimpuls übertragen, wird der Druck in der ersten Kammer grösser als der Druck in der zweiten Kammer. Die Schliessmembran an den Durchlassöffnungen öffnet sich und der Druck zwischen erster und zweiter Kammer gleicht sich durch Verschiebung der Abschlusswand der zweiten Kammer entgegen der Wirkung einer Rückstellfeder aus. An der zweiten Abschlusswand sind Magnete befestigt, die zum Zusammenwirken mit einem Schaltorgan bestimmt sind. Nach Wegnahme des Druckimpulses aus der Steuerkammer wird der Druck in der zweiten Kammer durch die auf die zweite Abschlusswand wirkende Federkraft grösser als der Druck in der ersten Kammer. Die Schliessmembran verschliesst nun die Durchlassöffnungen und ein Druckausgleich kann nur noch über die Drosselöffnung in der Gehäusewand erfolgen, wodurch die zweite Abschlusswand mit den Magneten nur mit Verzögerung durch die Rückstellfeder in ihre Ausgangsposition zurückverschoben wird.

Aufgabe der vorliegenden Erfindung ist es eine äusserst präzise arbeitende und platzsparende Steuervorrichtung zur Verfügung zu stellen.

Diese Aufgabe wird gelöst durch eine Steuervorrichtung gemäss den Merkmalen des Anspruches 1. Durch die Anordnung der Durchlassöffnung in dem zentralen, die zwei Kammern durchgreifenden Stössel ist eine sehr platzsparende und einfache Konstruktion ohne massives Gehäuse und ohne Bohrungen in diesem Gehäuse möglich.

Aufgrund der mitnahmefesten Anordnung der beiden Abschlussmembranen am Stössel werden diese zusammen mit dem Stössel bewegt, wodurch beide Kammern zugleich und ohne zeitliche Verzögerung von den wirkenden Kräften beaufschlagt werden und dies sowohl beim in Gang setzen der Steuereinheit über das Betätigungselement als auch bei der verzögerten Rückstellung. Dies erlaubt ein äusserst präzises Arbeiten der Steuereinheit.

Besonders vorteilhaft ist es, wenn auch die Abschlusswände an dem Stössel befestigt sind, da so die Abschlussmembranen geschont werden und sich ihre Lebensdauer erhöht.

Sehr vorteilhaft ist es, wenn ein einstellbares Drosselelement von der Seite des Betätigungselementes in den Stössel eingesetzt ist. So muss zum Einstellen der Rückstellzeit allenfalls nur das Betätigungselement entfernt werden, um das Drosselelement einstellen zu können.

Weitere bevorzugte Ausführungsformen sind Gegenstand weiterer abhängiger Ansprüche.

Anhand der einzigen Figur wird im Folgenden die Erfindung beispielhaft erläutert.

Die Figur zeigt rein schematisch eine Wasserarmatur im mit einer erfindungsgemässen Steuervorrichtung im Schnitt parallel zur Mittellängsachse der Steuervorrichtung.

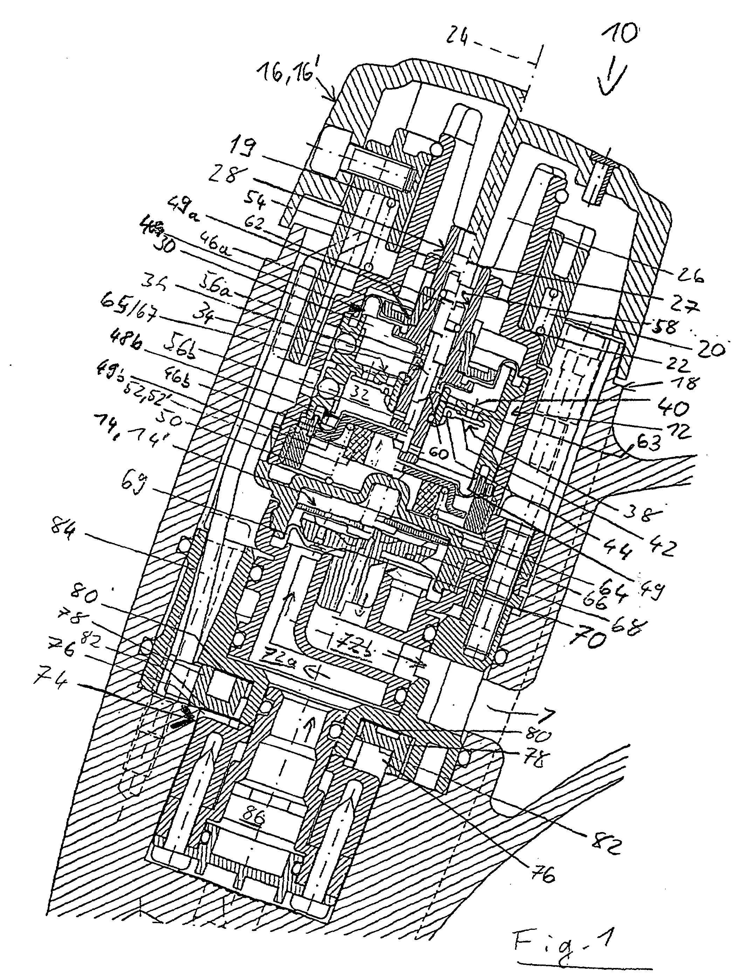

In Fig.1 ist als Beispiel eine Wasserarmatur 10 mit einer erfindungsgemässen Steuereinrichtung 12, einem Wasserventil 14' als Schaltorgan 14 und einem Druckknopf 16' als Betätigungselement 16 im Längsschnitt dargestellt. Die linke Hälfte zeigt die Wasserarmatur 10 in geschlossenem Zustand; die rechte Hälfte in geöffnetem Zustand.

Das Betätigungselement 16 ist das obere Ende eines Gehäuses 18 der Wasserarmatur 10 überdeckend, an einem im Gehäuse 18 verschiebbar angeordneten Führungsteil 19, das gegen die Kraft einer Grifffeder 20 bis auf Höhe eines Anschlags 22 in Richtung in das Gehäuse 18 verschiebbar ist, befestigt. Auf seiner Mittellängsachse 24, die auch die Mittellängsachse 24 des Gehäuses 18 und der Steuervorrichtung 12 ist, befindet sich ein Betätigungsstössel 26 des Druckknopfes 16', der bei geschlossener Wasserarmatur 10 an einer Stirnseite 27 eines zentralen Stössels 28 der Steuervorrichtung 12 anliegt und mit diesem zusammenwirkt.

Die Steuereinrichtung 12 ist konzentrisch zur Mittellängsachse 24 im Gehäuse 18 der Wasserarmatur 10 angeordnet. Sie weist eine von dem sich entlang der Mittellängsachse 24 erstreckenden Stössel 28 durchdrungene erste Kammer 30 und eine solche zweite Kammer 32 auf, die durch eine ortsfeste Trennwand 34 voneinander getrennt sind.

Über eine Drosselöffnung 36 und Rückschlagventile 38 sind die beiden Kammern 30, 32 miteinander verbunden. Die Rückschlagventile 38 sind radial zur Mittellängsachse 24 versetzt angeordnet. Sie sind durch in der Trennwand 34 auf einer Kreisbahn um die Mittellängsachse 24 befindliche Durchlassöffnungen 40 und eine die Durchlassöffnungen 40 dichtend schliessende, in Richtung der zweiten Kammer 32 öffenbaren Schliessmembran 42 derart gebildet, dass ein in den Kammern 30, 32 befindliches fliessfähiges Medium ungehindert von der ersten Kammer 30 in die zweite Kammer 32 strömen kann, nicht aber umgekehrt. Die Schliessmembran 42 ist auf der der zweiten Kammer 32 zugewandten Seite der Trennwand 34 angeordnet und an einem radial innen liegend Befestigungsrand 44 fest mit der Trennwand 34 verbunden.

Der Trennwand 34 jeweils gegenüberliegend weisen die zwei Kammern 30, 32 je eine Abschlusswand 48a, 48b mit einer die jeweilige Kammer 30, 32 auf dieser Seite abdichtenden flexiblen Abschlussmembran 46a, 46b auf. Die Abschlussmembranen 46a, 46b sind ringförmig ausgebildet und sowohl umfangseitig als auch auf ihrer radial innen liegenden Seite fixiert. Umfangseitig sind sie ortsfest zwischen Gehäuseteilen 49 der Steuervorrichtung befestigt. Auf ihrer radial innen liegenden Seite ist die Abschlussmembran 46a fest mit dem Stössel 28 verbunden und die Abschlussmembran 46b mittels einer Rückstellfeder 50 am Stössel 28 in Anlage gehalten. Auf der der betreffenden Kammer 30, 32 abgewandten Seite sind die Abschlussmembranen 46a, 46b durch tellerförmige Stützelemente 49a, 49b gestützt. Das Stützelement 49a ist durch Einschnappen am Stössel befestigt und das Stützelement 49b ist mittels der Rückstellfeder 50 gegen die Abschlussmembran 46b gedrängt und hält diese mit ihrem radial innenliegenden Randbereich am Stössel 28 mitnahmefest in Anlage. Das Stützelement 49b trägt als Betätigungsglied 52 für das Schaltorgan 14 einen Ringmagnet 52'.

Der Stössel 28 weist eine sich in Richtung der Mittellängsachse 24 erstreckende und an der Stirnseite 27 offene sacklochartige Aussparung 54 auf, in die aus Richtung des Betätigungselementes 16 ein Drosselelement 62 in den Stössel 28 eingesetzt ist. Über einen ersten radialen Durchlass 56a ist die Aussparung 54 mit der ersten Kammer 30 und über einen zweiten radialen Durchlass 56b mit der zweiten Kammer 32 verbunden. Zwischen den beiden Durchlässen 56a, 56b weist die Aussparung 54 auf ihrer Innenwand 58 eine Drosselöffnungbegrenzungsfläche 60 auf, die zusammen mit dem Drosselelement 62 die ringspaltförmige Drosselöffnung 36 bildet. Das Drosselelement 62 ist in Form einer Schraube ausgebildet, deren Gewinde mit einem auf der Innenwand 58 der Aussparung 54 angeordneten Gewinde zusammenwirkt. Die Drosselöffnung 36 ist dadurch sehr einfach durch Drehen des Drosselelementes 62 einstellbar.

Der Stössel 28 ist mittels des Betätigungselementes 16 in Richtung von der ersten Kammer 30 auf die zweite Kammer 32 verschiebbar und ist durch eine radial innen liegende Führungsfläche 63 der Trennwand 34 geführt. Im Stössel 28 befindet sich eine Ringnut 65 mit einem Dichtelement 67, das zwischen dem Stössel 28 und der Führungsfläche 63 dichtend wirkt, so dass das fliessfähige Medium in den Kammern 30, 32 nicht zwischen Stössel 28 und Führungsfläche 63 hindurchströmen kann.

Dem Ringmagneten 52' gegenüber und durch eine Zwischenwand 64 aus Kunststoff von der Steuereinrichtung 12 getrennt ist auf der Mittellängsachse 24 das Wasserventil 14' angeordnet. Dieses Wasserventil 14' herkömmlicher Bauart wirkt über ein als Magnetanker wirkendes Schaltelement 66 mit dem Ringmagneten 52' in bekannter Weise zusammen. Ein Schliesskörper 68 mit Dichtmembran 69 wirkt mit einem ringförmigen Ventilsitz 70 zwischen einem Wasserzulauf 72a und einem Wasserablaufes 72b zusammen.

Der Wasserzulauf 72a enthält gemischt kaltes und warmes Wasser aus einer Mischeinheit 74. Der Wasserzufluss in die Mischeinheit 74 erfolgt über eine Warmwasserleitung und eine Kaltwasserleitung (nicht dargestellt), deren Zulauföffnungen mit Regulierkolben 76 zusammenwirken. Die Regulierkolben 76 sind durch Verdrehen eines Steuerrings 78 gegensinnig einstellbar. Der Steuerring 78 liegt zu diesem Zweck gegen das Wasserventil 14' hin an einer Lagerfläche 80 an und weist auf seiner der Lagerfläche 80 gegenüberliegenden Seite eine gewölbte, mit den Regulierkolben 76 zusammenwirkende Steuerfläche 82 auf. Über einen Mitnehmer 84 ist der Steuerring 78 mit dem Betätigungselement 16 verbunden und ist durch Drehung des Betätigungselements 16 um die Mittellängsachse 24 herum verdrehbar. Dabei wirkt die Steuerfläche 82 mit den Regulierkolben 76 derart zusammen, dass diese die Zulauföffnungen gegengleich verengen bzw. erweitern. Den Steuerring 78 durchgreift eine Mischkammer 86, in den die Zulauföffnungen der Kalt- und Warmwasserleitung münden und die selbst in den Wasserzulauf 72a des Ventils 14' mündet.

Im folgenden soll nun die Funktionsweise an diesem Beispiel erläutert werden: Ist durch Drehen des Betätigungselementes 16 die gewünschte Wassertemperatur in der Mischeinheit 74 eingestellt, wird zum öffnen der Wasserarmatur 10 das Betätigungselement 16 gegen die Griffeder 20 in Richtung gegen das Gehäuse 18 gedrückt. Dadurch wird mittels des Betätigungsstössels 26 der Stössel 28 in Richtung von der ersten auf die zweite Kammer 32 hin verschoben. Gleichzeitig werden auch die am Stössel 28 angeordneten Abschlussmembranen 46a, 46b und Stützelemente 49a, 49b in diese Richtung verschoben und die Rückschlagventile von dem fliessfähigen Medium von der ersten Kammer 30 in Richtung zur zweiten Kammer 32 hin durchströmt. Der an der zweiten Abschlusswand 48b angebrachte Ringmagnet 52' wird gegen die Zwischenwand 64 verschoben und wirkt mit dem als Magnetanker wirkenden Schaltelement 66 des Wasserventils 14' zusammen, wodurch das Ventil 14' geöffnet und der Wasserfluss in Gang gesetzt wird. Über die Grifffeder 20 wird das Betätigungselement 16 in seine Ausgangslage zurück verschoben, wodurch der Stössel 28 vom Druck durch den Betätigungsstössel 26 entlastet wird. Zwischen den Kammern 30, 32 stellt sich ein Druckgleichgewicht ein und die Rückschlagventile 38 schliessen sich. Durch die auf die zweite Abschlusswand 48b wirkende Kraft der Rückstellfeder 50 wird in der zweiten Kammer 32 ein Druck aufgebaut. Das fliessfähige Medium strömt solange durch die Durchlässe 56a, 56b und die Drosselöffnung 36 in die erste Kammer 30 bis sich die Rückstellfeder 50 entspannt hat und in beiden Kammern 30, 32 gleicher Druck herrscht, wobei sich auch der Stössel 28 wieder in seine Ausgangslage bewegt. Bei genügend grosser Distanz zwischen Ringmagnet 52' und Schaltelement 66 reicht die Magnetkraft nicht mehr aus, um das Schaltelement 66 und das mit ihm verbundene Schliesselement des Wasserventils 14' in seiner offenen Position zu halten und das Ventil 14' schliesst selbsttätig.

Selbstverständlich kann eine solche Steuervorrichtung 10 auch in einer Armatur und auch ohne Mischeinheit 74 verwendet werden. Auch können innerhalb der Steuervorrichtung 12 die Rückschlagventile 38 und die Drosselöffnung 36 in ihren Details anders ausgebildet sein als in dem ausführlich beschriebenen Beispiel. Es kann auch nur ein Rückschlagventil vorgesehen sein. Der platzsparende Effekt durch die Anordnung der Drosselöffnung in dem zentralen, die beiden Kammern 30, 32 durchgreifenden Stössel 28 und die präzise Arbeitsweise der erfindungsgemässen Steuereinrichtung 12 werden dadurch nicht tangiert.

## Patentansprüche

1. Verzögernd rückstellende Steuervorrichtung für ein Schaltorgan (14), insbesondere ein Ventil (14'), mit zwei entlang einer sie durchdringenden Mittellängsachse (24) angeordneten, durch eine ortsfeste Trennwand (34) voneinander getrennten und mit einem fliessfähigen Steuermedium gefüllten Kammern (30, 32), wobei die zwei Kammern (30, 32) durch eine Drosselöffnung (3b) und durch mindestens ein radial zur Mittellängsachse (24) versetzt in der Trennwand (34) angeordnetes Rückschlagventil (38), das eine Strömung von der ersten Kammer (30) in die zweite Kammer (32) zulässt, miteinander verbindbar sind, und die zwei Kammern (30, 32) an ihrer der Trennwand (34) jeweils gegenüberliegenden Abschlusswand (48a, 48b) mit Abschlussmembranen (46a, 46b) abgedichtet sind, wobei die Abschlusswand (48b) der zweiten Kammer (32) gegen die Wirkung einer Rückstellfeder (50) verschiebbar und mit einem Betätigungsglied (52, 52') für das Schaltorgan (14) verbunden ist, **gekennzeichnet durch** einen auf der Mittellängsachse (24) befindlichen und die zwei Kammern (30, 32) durchgreifenden, zentralen Stössel (28), in dem die Drosselöffnung (36) angeordnet ist und mit dem die Abschlussmembranen (46a, 46b) der zwei Kammern (30, 32) mitnahmefest verbunden sind, und der mittels eines Betätigungselementes (16) in Richtung von der ersten Kammer (30) auf die zweite Kammer (32) verschiebbar ist.

2. Steuervorrichtung nach Anspruch 1, **dadurch gekennzeichnet, dass** auf einer Kreisbahn um die Mittellängsachse (24) mehrere Rückschlagventile (38)in der Trennwand (34) angeordnet sind.

3. Steuervorrichtung nach Anspruch 1 oder 2, **dadurch gekennzeichnet, dass** das Rückschlagventil (38) eine radial zur Mittellängsachse (24) versetzte Durchlassöffnung (40) in der Trennwand (34) und eine die Durchlassöffnung (40) dichtend schliessende, in Richtung der zweiten Kammer (32) öffenbare Schliessmembran (42) aufweist, wobei die Schliessmembran (42) vorzugsweise auf der der zweiten Kammer (32) zugewandten Seite der Trennwand (34) befestigt ist.

4. Steuervorrichtung nach Anspruch 3, **dadurch gekennzeichnet, dass** die Schliessmembran (42) auf der radial innen liegenden Seite an der Trennwand (34) befestigt ist.

5. Steuervorrichtung nach einem der Ansprüche 1 bis 4, **dadurch gekennzeichnet, dass** die Abschlusswand (48a) der ersten Kammer (30) mit dem zentralen Stössel (28) fest verbunden ist und die Abschlusswand (48b) der zweiten Kammer (32) mittels der Rückstellfeder (50) am Stössel (28) in Anlage gehalten ist.

6. Steuervorrichtung nach einem der Ansprüche 1 bis 5, **dadurch gekennzeichnet, dass** die Trennwand (34) radial innen liegend ein Führungsfläche (63) zur Führung des zentralen Stössels (28) aufweist.

7. Steuervorrichtung nach Anspruch 6, **dadurch gekennzeichnet, dass** zwischen dem Stössel (28) und der Führungsfläche (63) ein Dichtelement (67) angeordnet ist, das einen Durchtritt des fliessfähigen Mediums zwischen Stössel (28) und Führungsfläche (63) verhindert.

8. Steuervorrichtung nach einem der Ansprüche 1 bis 7, **dadurch gekennzeichnet, dass** die Drosselöffnung (36) mittels eines Drosselelementes (62) einstellbar ist.

9. Steuervorrichtung nach Anspruch 8, **dadurch gekennzeichnet, dass** der Stössel (28) eine sich in Richtung der Mittellängsachse (24) erstreckende, sacklochartige Aussparung (54) aufweist, die über je mindestens einen radialen Durchlass (56a, 56b) mit der ersten Kammer (30) und der zweiten Kammer (32) verbunden ist, wobei die Innenwand (58) der Aussparung (54) zwischen den beiden Durchlässen (56a, 56b) eine Drosselöffnungbegrenzungsflache (60) aufweist, die zusammen mit dem Drosselelement (62) die Drosselöffnung (36) bildet.

10. Steuervorrichtung nach Anspruch 8 oder 9, **dadurch gekennzeichnet, dass** das Drosselelement (62) aus der Richtung des Betätigungselementes (16) her in den Stössel (28) einsetzbar ist, wobei der Stössel (28) vorzugsweise auf der Innenwand (54) der Aussparung ein Gewinde aufweist und das Drosselelement vorzugsweise eine Schraube mit dazu passendem Gewinde ist.

## Claims

1. Control device with delayed resetting for an operating member (14), in particular a valve (14'), having two chambers (30, 32) which are arranged along a centre longitudinal axis (24) passing through them, are separated from one another by a fixed dividing wall (34) and are filled with a free-flowing control medium, it being possible for the two chambers (30, 32) to be connected to one another by a choke opening (36) and by at least one non-return valve (38) which is arranged in the dividing wall (34) such as to be offset radially from the centre longitudinal axis (24) and which permits a flow from the first chamber (30) into the second chamber (32), and the two chambers (20, 32) being sealed off with end diaphragms (46a, 46b) at their end wall (48a, 48b) in each case opposite the dividing wall (34), the end wall (48b) of the second chamber (32) being displaceable against the action: of a resetting spring (50) and being connected to an actuating member (52, 52') for the operating member (14), **characterized by** a central plunger (28) which is located on the centre longitudinal axis (24) and passes through the two chambers (30, 32) and in which the choke opening (36) is arranged and with which the end diaphragms (46a, 46b) of the two chambers (30, 32) are in fixed driving connection and which is displaceable in the direction from the first chamber (30) towards the second chamber (32) by means of an actuating element (16).

2. Control device according to Claim 1, **characterized in that** a plurality of non-return valves (38) are arranged in the dividing wall (34) on a circular path around the centre longitudinal axis (24).

3. Control device according to Claim 1 or 2, **characterized in that** the non-return valve (38) has a passage opening (40), offset radially from the centre longitudinal axis (24), in the dividing wall (34) and a closing diaphragm (42) which closes the passage opening (40) in a sealing manner and can be opened in the direction of the second chamber (32), the closing diaphragm (42) preferably being fastened to that side of the dividing wall (34) which faces the second chamber (32).

4. Control device according to Claim 3, **characterized in that** the closing diaphragm (42) is fastened to the dividing wall (34) on the radially inner side.

5. Control device according to one of Claims 1 to 4, **characterized in that** the end wall (48a) of the first chamber (30) is firmly connected to the central plunger (28), and the end wall (48b) of the second chamber (32) is held in contact with the plunger (28) by means of the resetting spring (50).

6. Control device according to one of Claims 1 to 5, **characterized in that** the dividing wall (34) has a guide surface (63) radially on the inside for guiding the central plunger (28).

7. Control device according to Claim 6, **characterized in that** a sealing element (67) is arranged between the plunger (28) and the guide surface (63), this sealing element (67) preventing the free-flowing medium from passing through between plunger (28) and guide surface (63).

8. Control device according to one of Claims 1 to 7, **characterized in that** the choke opening (36) can be set by means of a choke element (62).

9. Control device according to Claim 8, **characterized in that** the plunger (28) has a blind-hole-like recess (54) which extends in the direction of the centre longitudinal axis (24) and is connected via at least one radial passage (56a, 56b) in each case to the first chamber (30) and the second chamber (32), the inner wall (58) of the recess (54), between the two passages (56a, 56b), having a choke-opening boundary surface (60) which, together with the choke element (62), forms the choke opening (36).

10. Control device according to Claim 8 or 9, **characterized in that** the choke element (62) can be inserted into the plunger (28) from the direction of the actuating element (16), the plunger (28) preferably having a thread on the inner wall (54) of the recess and the choke element preferably being a screw with matching thread.

## Revendications

1. Dispositif de commande produisant une action de rappel retardée pour un organe de commutation (14), notamment une soupape (14'), comportant deux chambres (30, 32), qui sont disposées le long d'un axe médian longitudinal (24), qui traverse ce dispositif, sont séparées l'une de l'autre par une paroi de séparation fixe (34) et sont remplies par un milieu de commande fluide, dans lequel les deux chambres (30, 32) peuvent être reliées entre elles par une ouverture d'étranglement (3b) et par une soupape antiretour (38), qui est disposée dans la paroi de séparation (34) en étant décalée radialement par rapport à l'axe médian longitudinal (24) et permet un écoulement depuis la première chambre (30) dans la deuxième chambre (32), et les deux chambres (30, 32) sont fermées de façon étanche au niveau de leur paroi de fermeture (48a, 48b) située respectivement à l'opposé de la paroi de séparation (34) avec des membranes de fermeture (46a, 46b), et dans lequel la paroi de fermeture (48a) de la deuxième chambre (32) est déplaçable à l'encontre de l'action d'un ressort de rappel (50) et est reliée à un organe d'actionnement (52, 52') pour l'organe de commutation (14), **caractérisé par** un poussoir central (28), qui est situé sur l'axe médian longitudinal (24) et traverse les deux chambres (30, 32) et dans lequel est disposée l'ouverture d'étranglement (36) et auquel les membranes de fermeture (46a, 46b) de deux chambres (30, 32) sont reliées selon une liaison d'entraînement fixe, et qui est déplaçable au moyen d'un élément d'actionnement (16) dans la direction allant de la première chambre (30) vers la seconde chambre (32).

2. Dispositif de commande selon la revendication 1, **caractérisé en ce que** plusieurs soupapes antiretour (48) sont disposées dans la paroi de séparation (34), sur une trajectoire circulaire autour de l'axe médian longitudinal (24).

3. Dispositif de commande selon la revendication 1 ou 2, **caractérisé en ce que** la soupape antiretour (38) comporte une ouverture de passage (40), qui est décalée radialement par rapport à l'axe médian longitudinal (24) et formée dans la paroi de séparation (34), et une membrane de fermeture (42), qui ferme d'une manière étanche l'ouverture de passage (40) et peut s'ouvrir en direction de la seconde chambre (32), la membrane de fermeture (41) étant fixée de préférence sur le côté de la paroi de séparation (34), qui est tourné vers la seconde chambre (32).

4. Dispositif de commande selon la revendication 3, **caractérisé en ce que** la membrane de fermeture (42) est fixée à la paroi de séparation (34) sur le côté situé intérieurement du point de vue radial.

5. Dispositif de commande selon l'une des revendications 1 à 4, **caractérisé en ce que** la paroi de fermeture (48a) de la première chambre (30) est reliée de façon fixe au poussoir central (28) et que la paroi de fermeture (48b) de la seconde chambre (32) est maintenue appliquée contre le poussoir (28) au moyen du ressort de rappel (50).

6. Dispositif de commande selon l'une des revendications 1 à 5, **caractérisé en ce que** la paroi de séparation (34) possède sur le côté intérieur du point de vue radial, une surface de guidage (63) servant à guider le poussoir central (28).

7. Dispositif de commande selon la revendication 6, **caractérisé en ce qu'**entre le poussoir (38) et la surface de guidage (63) est disposé un élément d'étanchéité (67), qui empêche un passage du milieu fluide entre le poussoir (28) et la surface de guidage (63).

8. Dispositif de commande selon l'une des revendications 1 à 7, **caractérisé en ce que** l'ouverture d'étranglement (36) est réglable à l'aide d'un élément d'étranglement (62).

9. Dispositif de commande selon la revendication 8, **caractérisé en ce que** le poussoir (28) possède un évidement en forme de trou borne (44), qui s'étend dans la direction de l'axe médian longitudinal (24) et est relié par l'intermédiaire respectivement d'au moins un passage radial (56a, 56b) à la première chambre (30) et à la seconde chambre (32), la paroi intérieure (58) de l'évidement (54) possédant entre les deux passages (56a, 56b), une surface (60) de limitation de l'ouverture d'étranglement, qui forme, conjointement avec l'élément d'étranglement (62), l'ouverture d'étranglement (36).

10. Dispositif de commande selon la revendication 8 ou 9, **caractérisé en ce que** l'élément d'étranglement (62) peut être inséré, dans la direction de l'élément d'actionnement (16), dans le poussoir (28), le poussoir (28) possédant un filetage de préférence sur la paroi intérieure (54) de l'évidement et l'élément d'étranglement étant de préférence une vis comportant un filetage qui est adapté à celui de l'évidement.
